# EUROPÄISCHE PATENTSCHRIFT

(11) **EP 0 951 412 B1**
(45) Veröffentlichungstag und Bekanntmachung des Hinweises auf die Patenterteilung: **23.08.2000**
(21) Anmeldenummer: 97954941.7
(22) Anmeldetag: 22.12.1997
(51) Int. Cl.: B60T 8/36, F16K 31/06, H01F 7/16

(54) **MAGNETVENTIL**
MAGNETIC VALVE
VANNE MAGNETIQUE

(30) Priorität: 14.01.1997 DE 19700979
(43) Veröffentlichungstag der Anmeldung: 27.10.1999
(73) Patentinhaber: Continental Teves AG & Co. oHG, 60488 Frankfurt (DE)
(72) Erfinder: FEIGEL, Hans-Jörg, D-61191 Rosbach (DE); RÜFFER, Manfred, D-65843 Sulzbach (DE); GERMUTH-LÖFFLER, Michael, D-63839 Kleinwallstadt (DE); SCHIEBLICH, Wolfgang, D-64331 Weiterstadt (DE)
(86) Internationale Anmeldenummer: EP9707239
(87) Internationale Veröffentlichungsnummer: WO9831577

(56) Entgegenhaltungen:
- WO-A-94/01708
- CH-A- 309 663
- DE-A- 2 208 183
- DE-A- 2 236 586
- DE-A- 2 337 422
- DE-A- 4 003 606
- DE-C- 3 634 349
- DE-U- 8 522 724

## Beschreibung

Die Erfindung betrifft ein Magnetventil für flüssige und gasförmige Arbeitsmedien, insbesondere für hydraulische Bremsanlagen in Kraftfahrzeugen, nach dem Oberbegriff des Patentanspruchs 1.

Ein Magnetventil ist aus der WO 94/01708A bekannt. Es umfaßt gemäß dargestelltem Ausführungsbeispiel ein oberes Gehäuseteil in Form einer endseitig geschlossenen dünnwandigen Hülse und ein unteres Gehäuseteil mit Ventilsitz und Durchlässen für das Zu- und Abströmen eines Arbeitsmediums. Das untere Gehäuseteil ist in eine Ventilaufnahme abdichtend eingepreßt, während das obere Gehäuseteil von einer Magnetspule umgeben ist. Zur Verbindung der beiden Gehäuseteile dient ein Magnetkern, der mit seinem unteren, zylindrischen Bereich in das untere Gehäuseteil und mit seinem oberen zylindrischen Bereich kleineren Durchmessers in das obere Gehäuseteil eingesetzt ist. Der Übergangsbereich ist konisch ausgebildet. Auf ihm liegt das obere Gehäuseteil mit seinem konisch erweiterten unteren Ende auf. Magnetkern und oberes Gehäuseteil sind durch plastische Materialverdrängung oberhalb des Übergangsbereichs im unteren Gehäuseteil befestigt. Im Magnetkern ist ein Stößel geführt, der mit dem Ventilsitz zusammenwirkt und mit einem oberhalb des Magnetkerns im oberen Gehäuseteil angeordneten, längsverschieblichen Anker verbunden ist, der durch eine sich im Magnetkern abstützende, in Öffnungsrichtung des Ventils wirkende Rückstellfeder gegen den vom oberen Ende des oberen Gehäuseteils gebildeten Anschlag gedrückt wird. Bei Bestromung der Magnetspule wird ein Magnetfeld aufgebaut, durch das der Anker den Stößel unter Überwindung des Widerstandes der Rückstellfeder gegen den Ventilsitz treibt. Das bekannte Magnetventil ist also als stromlos offenes Ventil, kurz SO-Ventil dargestellt.

Bei diesem Ventil besteht das obere Gehäuseteil aus einem nicht ferromagnetischen Material, damit ein magnetischer Kurzschluß vermieden und das Ventil ohne allzu hohe Verluste betrieben werden kann. Dieser Aspekt ist von besonderer Bedeutung, wenn, wie bei Antiblockiersystemen (ABS) bzw. bei der Antischlupfregelung (ASR) in Kraftfahrzeugen einerseits hohe Schließdrücke und andererseits geringe Baugröße gefordert werden. In diesen und anderen Anwendungsfällen ist man bestrebt, die magnetischen Verluste möglichst klein zu halten, um einen auch wirtschaftlich vertretbaren Kompromiß zwischen den gegenläufigen Forderungen zu erreichen.

Da der Anker funktionsbedingt axial beweglich sein muß, ist ein radialer Luftspalt ebenso unvermeidbar wie ein axialer Restluftspalt zwischen Magnetkern und Anker zur Vermeidung einer Klebverbindung. Außerdem muß die Wanddicke des nicht ferromagnetischen oberen Gehäuseteils als verlustbringender "Luftspalt" gerechnet werden. Mit anderen Worten, die sich aus der Summe der Luftspalte ergebenden magnetischen Verluste haben bei dem bekannten Magnetventil einen Wert, der auch bei Einhaltung sehr enger Fertigungstoleranzen nicht weiter reduziert werden kann.

Ein weiterer Nachteil des bekannten Magnetventils besteht darin, daß es nur sehr umständlich einstellbar ist. Bei der Montage wird zwischen Anker und Magnetkern eine dünne Scheibe entsprechend dem gewünschten Restluftspalt eingelegt und dann das obere Gehäuseteil mit Inhalt in das untere Gehäuseteil eingesteckt, bis der Magnetkern in axialer Richtung am unteren Gehäuseteil anliegt. Dabei wird der zunächst nur im leichten Preßsitz in den Anker eingesteckte Stößel, der sich auf dem Ventilsitz abstützt, relativ zum Anker nach oben verschoben. Anschließend werden die Teile wieder auseinandergenommen und der Stößel durch Verstemmen im Anker festgelegt.

Im zweiten Einstellschritt wird zwischen Anker und Magnetkern eine Scheibe gemäß dem gewünschten Luftspalt in stromlosem Zustand, also gemäß Restluftspalt plus gewünschtem Arbeitshub eingelegt und alles wieder zusammengebaut und das obere Gehäuseteil in das untere eingedrückt, bis der Magnetkern am Anschlag anliegt. Dabei wird der Anker in seinem oberen, geschwächten Bereich plastisch um das gewünschte Maß verkürzt. Anschließend muß alles wieder auseinandergenommen und die Scheibe entfernt werden, bevor in einem dritten Schritt die Teile wieder zusammengebaut und, wie eingangs beschrieben, miteinander verbunden werden können.

Aus der gattungsbildenden DE-U-8522724.2 geht bereits ein Magnetventil hervor, mit einem ersten zylindrischen, aus einem ferromagnetischem Material hergestellten Gehäuseteil zur Bildung des Magnetkerns und einem zweiten hülsenförmigen, aus einem ferromagnetischem Material bestehenden Gehäuseteil zur Aufnahme eines Magnetankers und eines Ventilsitzkörpers, der mehrere Druckmitttelanschlüsse aufweist, die in der Grundstellung des Ventils durch einen am Magnetanker angebrachten Stößel hydraulisch getrennt sind. Zwischen den beiden Gehäuseteilen befindet sich ein weiterer Gehäuseabschnitt, der aus einem nicht magnetischen Werkstoff besteht. Die vorgenannten separaten Gehäuseteile sind im Bereich des nichtmagnetischen Werkstoffs zusammengefügt.

Der Erfindung liegt die Aufgabe zugrunde, ein Magnetventil der eingangs genannten Art so weiterzubilden, daß einerseits die magnetischen Verluste im Arbeitsbereich des Ventils weiter herabgesetzt werden können und daß andererseits die Ventileinstellung vereinfacht werden kann.

Erfindungsgemäß wird diese Aufgabe für das angegebene Magnetventil durch die kennzeichnenden Merkmale des Patentanspruchs 1 gelöst.

Überraschenderweise hat sich gezeigt, daß die Verluste infolge magnetischem Kurzschluß bei Verwendung von üblichem ferromagnetischen Automatenstahl kleiner sind als bei einem in der Baugröße vergleichbaren Magnetventil der bekannten Art, weil einerseits zumindest die radialen Luftspaltverluste herabgesetzt werden können und weil andererseits im Bereich der Hülse wegen der geringen Wanddicke sehr rasch eine magnetische Sättigung eintritt. Selbst bei Arbeitsdrücken von 200 bis 350 bar und Berücksichtigung üblicher Sicherheitszuschläge kann der tragende Hülsenquerschnitt soweit verringert werden, daß die Kurzschlußverluste bei dem einteiligen Gehäuse niedriger sind als bei dem bekannten zweiteiligen Gehäuse mit einem oberen, hülsenartigen Teil aus nicht ferromagnetischem Werkstoff. Außerdem stehen über Werkstoffauswahl und gezielte Wärmebehandlung weitere Maßnahmen zur Verfügung, den notwendigen Kompromiß bei der Auslegung des Hülsenquerschnitts so zu verschieben, daß die magnetischen Kurzschlußverluste weiter reduziert werden.

Vorteilhafte Ausgestaltungen des Erfindungsgedankens sind in den Unteransprüchen beschrieben.

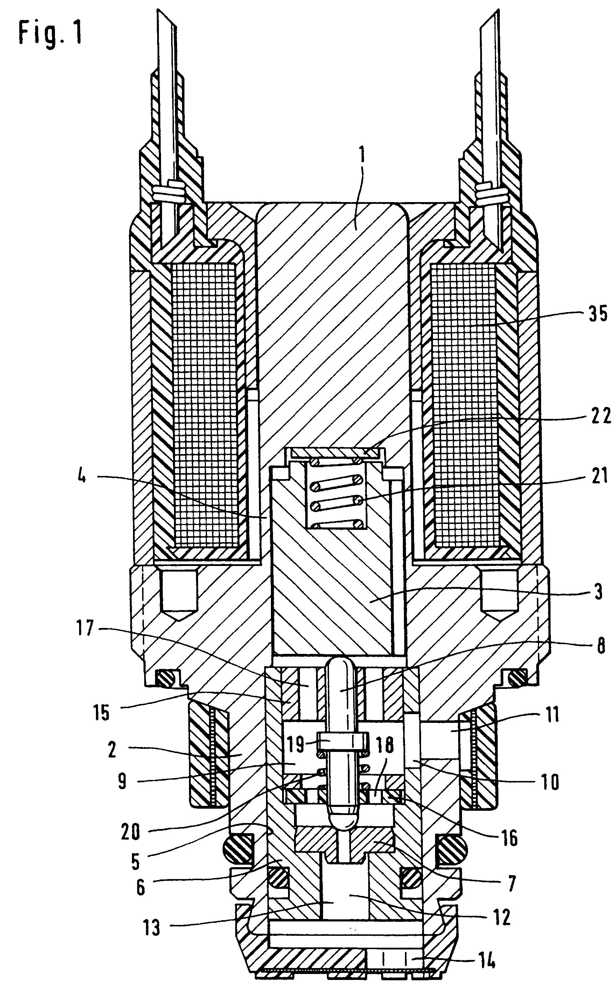

Die einteilige Gehäuseausführung hat den weiteren Vorteil, daß Anpassungs- und Fügeschritte entfallen können und daß die Anzahl der zu berücksichtigenden Fertigungstoleranzen verringert ist. Dies macht sich insbesondere bei der Einstellung des Magnetventils bemerkbar, wobei wegen der Vielzahl der zusammenwirkenden Teile bei Magnetventilen für einen Arbeitsdruck von beispielsweise 200 bis 220 bar der Arbeitsdruck ohne Justierung zwischen 200 und 350 bar streuen kann. Einzelheiten zu den bei dem erfindungsgemäßen einteiligen Gehäuse möglichen Einstellmethoden werden anhand der in den Figuren 1 bis 4 dargestellten Ausführungsbeispiele näher erläutert.

Es zeigen:
- Fig. 1: ein erstes Ausführungsbeispiel eines Magnetventils gemäß der Erfindung im Vertikalschnitt,
- Fig. 2: ein zweites Ausführungsbeispiel,
- Fig. 3: eine Abwandlung des zweiten Ausführungsbeispiels,
- Fig. 4: eine weitere Abwandlung des zweiten Ausführungsbeispiels.

Bei dem Ausführungsbeispiel gemäß Fig. 1 besteht das obere Gehäuseteil 1 des einteiligen Gehäuses aus einem massiven zylindrischen Abschnitt, der von einer Magnetspule 35 umgeben ist, und einer sich daran nach unten anschließenden Hülse 4, die mit dem als Einschraubteil ausgebildeten unteren Gehäuseteil 2 einstückig verbunden ist. Die Hülse 4 und der obere Bereich des oberen Gehäuseteils 2 dienen zur axialen Führung des Ankers 3, der sich einerseits an einer in Schließrichtung wirkenden Rückstellfeder 21 und einer Antiklebscheibe 22 im massiven zylindrischen Abschnitt und andererseits auf den Stößel 8 abstützt, der seinerseits am Ventilsitz 7 anliegt. Das untere Gehäuseteil 2 besitzt eine gegenüber der Ankerführung etwas größere zentrale Bohrung, wobei der Durchmessersprung einen Gehäuseanschlag bildet, der als Bezugsebene verwendbar ist, wie noch erläutert wird. In diese Bohrung ist ein rohrförmiger Träger 6 eingesetzt, der außer dem Ventilsitz 7 noch einen Einsatz 15 und eine Scheibe 16 aufweist, die zur Führung des Stößels 8 dienen. Der Einsatz 15 ist in den Träger 6 eingepreßt und ggf. noch randseitig veschweißt, während die Scheibe 16 mittels eines nicht bezeichneten Verstemmmrings im Träger 6 gehalten wird. Durch den Ventilsitz 7 ist der Innenraum des Trägers 6 in einen oberen Innenraum 9 und einen unteren Innenraum 12 unterteilt, die über eine radiale bzw. axiale Bohrung 10, 13 mit äußeren Ventilanschlüssen 11, 14 in Verbindung stehen. Der Einsatz 15 und die Scheibe 16 haben außer der zentralen Bohrung zur Führung des Stößels 8 noch mindestens je einen Durchlaß 17, 18 für den Durchtritt des Arbeitsmediums. Der Stößel 8 ist mit einem Widerlager 19 ausgestattet, an den sich eine in Öffnungsrichtung wirkende Rückstellfeder 20 abstützt, deren anderes Widerlager die Scheibe 16 bildet.

Zur Hubeinstellung wird einerseits ermittelt, wie weit der im Träger 6 vormontierte Stößel 8 bei komprimierter Rückstellfeder 20 und Abstützung auf dem Ventilsitz 7 über die obere Begrenzungsebene des mit dem Träger 6 bündig montierten Einsatz 15 vorsteht und andererseits, wie weit der Anker 3 bei komprimierter Rückstellfeder 21 und Anlage des Ankers 3 am oberen Gehäuseteil 1 ohne Antiklebscheibe gegenüber der im Gehäuse durch den Durchmessersprung gebildeten Bezugsebene zurücksteht. Aus beiden Messungen wird dann die Dicke der erforderlichen Antiklebscheibe 22 berechnet.

In den folgenden Figuren werden Bezugszeichen nur insoweit verwendet, wie sie zur Erläuterung der Unterschiede gegenüber den zuvor beschriebenen Ausführungsformen erforderlich sind. Auf nicht abgewandelte bzw. aus sich heraus verständliche Einzelheiten wird nicht eingegangen, um die Übersichtlichkeit nicht zu beeinträchtigen. Das gilt insbesondere auch für die dargestellten peripheren Bauteile, wie Dichtungen, Abschlußkappen und Filter, die bei derartigen Magnetventilen üblich und dem Fachmann geläufig sind.

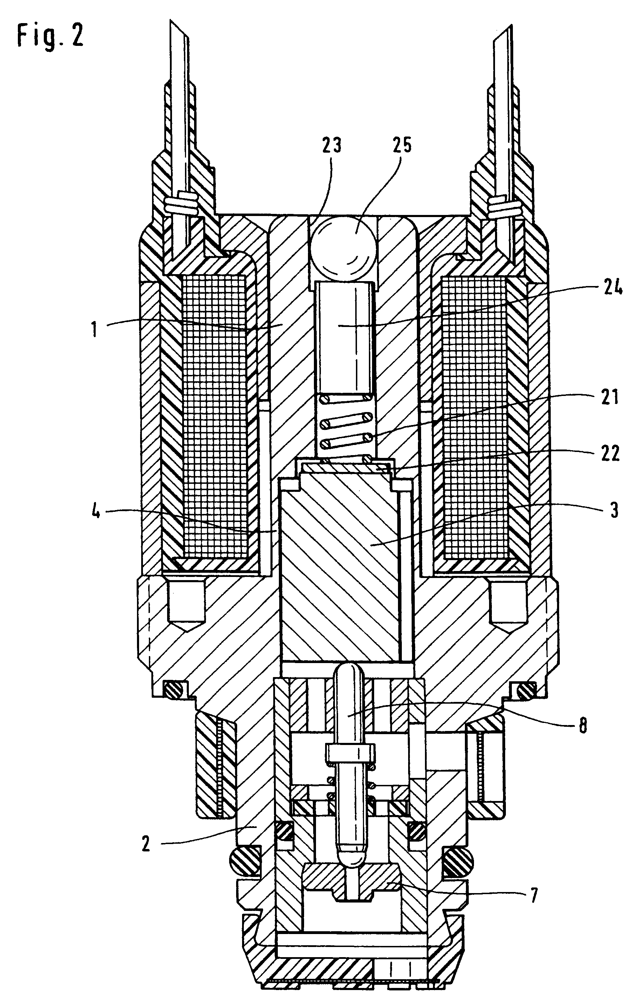

Bei der Ausführungsform gemäß Fig. 2 ist das obere Gehäuseteil 1 mit einer zentralen Bohrung 23 versehen, die zweckmäßigerweise abgestuft ist und die zur Aufnahme der Rückstellfeder 21 und eines zylindrischen Widerlagers 24 dient. Das untere Gehäuseteil 2 mit Ventilsitz 7 und Stoßel 8 ist im Vergleich zu Fig. 1 unverändert. Der über einen Bereich seiner Länge in der Hülse 4 des Gehäuses 1, 2 geführte Anker 3 ist über den Stößel 8 auf dem Ventilsitz 7 und über eine Antiklebscheibe 22 gegen die Rückstellfeder 21 abgestützt, die sich ihrerseits über das Widerlager 24 an der in die Bohrung 23 abdichtend eingepreßten Kugel 25 abstützt. Zur Einstellung des gewünschten Schließdrucks wird die Kugel bei der Montage in die Bohrung 23 soweit nach unten eingepreßt, bis die Vorspannung der Rückstellfeder 21 am Ventilsitz 3 den gewünschten Schließdruck ergibt, wobei letzterer von unten durch den Ventilsitz entweder mechanisch oder hydraulisch auf den Stößel 8 aufgebracht wird. Mit anderen Worten, die Kugel 25 wird soweit eingeschoben, bis der Ventilsitz 7 bei angelegtem Öffnungsdruck mittels des Stößels 8 geschlossen ist.

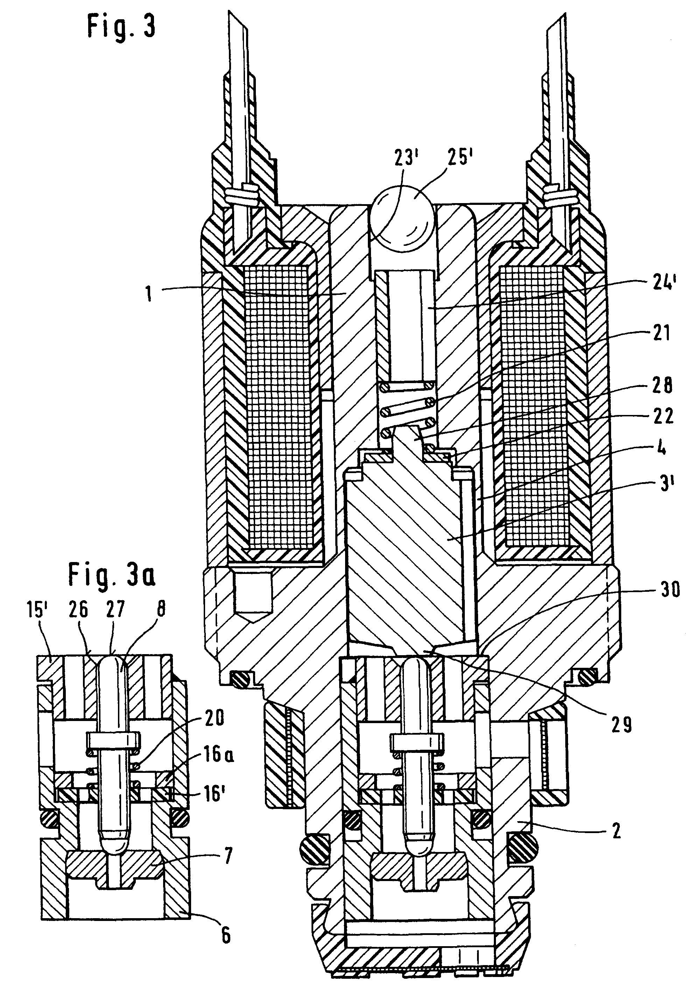

Die Ausführungsform gemäß Fig. 3 unterscheidet sich von der Ausführungsform gemäß Fig. 2 dadurch, daß die Kugel 25' in der Bohrung 23' keine Einstell- sondern nur eine Dichtfunktion hat. Das in das Gehäuseteil 1 unverschieblich eingesetzte hohlzylindrische Widerlager 24' dient der Rückstellfeder 21 als obere Abstützung, während die untere Abstützung über die Antiklebscheibe 22 auf den Anker 3' erfolgt, der mit einem zentralen Führungszapfen 28 ausgestattet ist. An der gegenüberliegenden Seite hat der Anker 3' einen plastisch verformbaren Wulst 29. Das Gehäuseteil 2 hat wieder einen Anschlag 30 und beide Gehäuseteile 1, 2 sind über eine Hülse 4 einstückig miteinander verbunden.

Zur Erläuterung der Einstellung ist der Träger 6 mit den darin enthaltenen Bauteilen in Fig. 3a noch einmal besonders dargestellt. Der Stößel 8 liegt am Ventilsitz 7 an und ist durch den Einsatz 15' und die Scheibe 16' geführt, wobei letztere durch einen Klemmring 16a im Träger 6 gehalten wird. Bei der Vormontage wird der Einsatz 15' in den Träger 6 eingeschoben, bis seine obere Begrenzungsebene 26 mit der Anschlagfläche 27 des Stößels 8 bündig ist, der dabei unter Komprimierung der Rückstellfeder 20 am Ventilsitz 7 anliegt. In dieser Position wird der Einsatz 15' im Träger 6 festgelegt. Anschließend wird der Anker 3' bis zum Anschlagnach oben gedrückt und der Wulst 29 plastisch verformt, bis seine Anschlagfläche um den gewünschten Arbeitshub gegenüber dem Anschlag 30 im zweiten Gehäuseteil 2 zurücksteht.

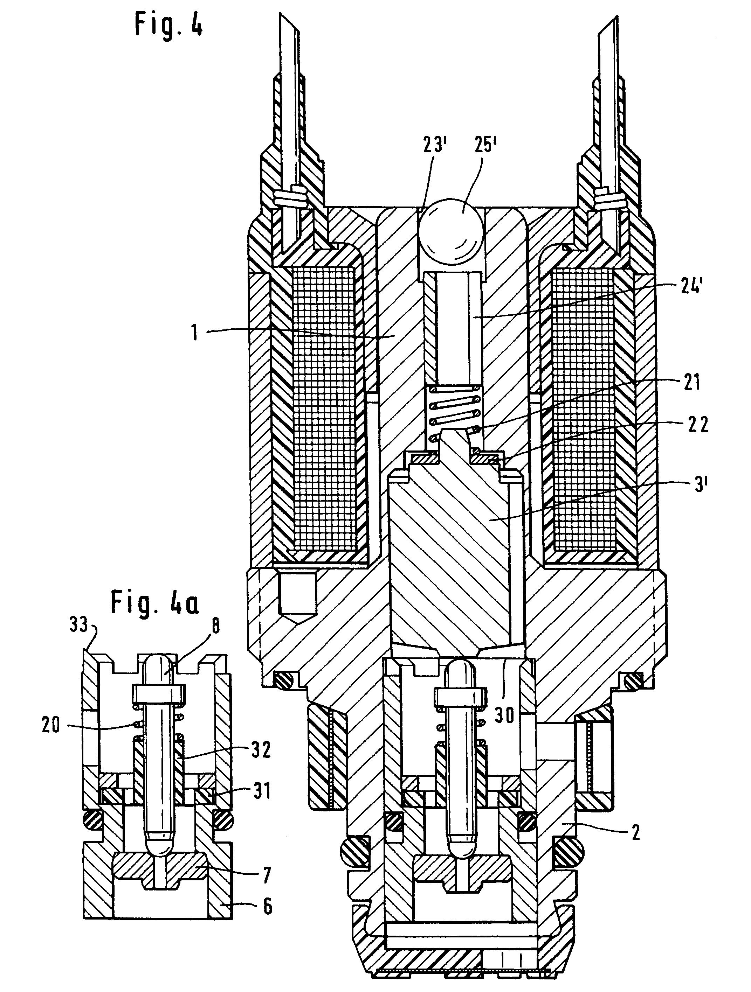

Fig. 4 zeigt eine abgewandelte Ausführungsform zu Fig. 3, wobei nur Fig. 4a näher zu erläutern ist. Anstelle des Einsatzes 15' und der Scheibe 16' ist zur Führung des Stößels 8 nur noch ein scheibenartiger Einsatz 31 mit verlängertem Führungsteil 32 vorgesehen. Der Träger 6 ist an seinem oberen Ende plastisch verformbar ausgestaltet, indem im zylindrischen Rand Ausnehmungen vorgesehen und die verbleibenden Randteile verjüngt sind. Bei der Vormontage wird dafür gesorgt, daß der obere Bereich 33 des Trägers 6 durch plastische Umformung soweit zurückgedrängt wird, daß seine Anschlagsebene mit der des Stößels 8 bündig ist, der dabei am Ventilsitz anliegt. Die weitere Einstellung am Anker 3' erfolgt wie bei Fig. 3.

Die vorstehend beschriebenen Ausführungsformen und Einstellmöglichkeiten erlauben eine Anpassung des erfindungsgemäß einteiligen Gehäuses an die verschiedensten Anforderungen. Insbesondere sind, wie dargestellt, stromlos geschlossene Ventile realisierbar. In allen Fällen können die sich addierenden Fertigungstoleranzen beim Zusammenbau eingestellt werden. Das Gehäuse ist wirtschaftlicher herstellbar als mehrteilige Gehäuse. Es erfordert geringeren Montageaufwand und ein damit ausgestattetes Magnetventil ist sehr einfach einstellbar.

## Patentansprüche

1. Magnetventil für flüssige und gasförmige Arbeitsmedien, insbesondere für hydraulische Bremsanlagen in Kraftfahrzeugen, mit einem ersten zylindrischen Gehäuseteil (1), das außen von einer Magnetspule (35) umgeben ist und innen eine in der Längserstreckung des Magnetventils verlaufende zylindrische Ausnehmung zur Aufnahme und Führung eines Ankers (3, 3') aufweist, mit einer ersten Rückstellfeder (21) und einem als Stößel (8) ausgeführten Ventilschließglied, einem zweiten zylindrischen Gehäuseteil (2), das koaxial zum ersten Gehäuseteil (1) angeordnet ist und eine in Richtung der Längserstreckung des Magnetventils verlaufende zylindrische Ausnehmung (5) aufweist, die mit äußeren Ventilanschlüssen (11, 14) in Verbindung steht und in der ein mit dem Stößel (8) zusammenwirkender Ventilsitz (7) angeordnet ist, wobei der Stößel (8) und der Ventilsitz (7) in einem rohrförmigen Träger (6) aufgenommen sind, und wobei der Träger (6) in der Ausnehmung (5) des zweiten Gehäuseteils (2) angeordnet ist, dadurch **gekennzeichnet**, daß der Träger (6) mit seiner oberen Begrenzung an einem umlaufenden Anschlag (30) im Gehäuse (1, 2) anliegt, daß der Stößel (8) als im Träger (6) vormontierte Einheit geführt ist und daß das erste und zweite Gehäuseteil (1, 2) ein einstückig aus ferromagnetischem Material hergestelltes Gehäuse bilden, das den Anker (3, 3') zumindest über einen Teil in der Längserstreckung des Magnetventils in Form einer Hülse (4) umgibt, deren Wanddicke zur Verminderung des magnetischen Kurzschlusses nicht größer ist als zur sicheren Aufnahme der mechanischen Beanspruchungen erforderlich ist.

2. Magnetventil nach Anspruch 1, dadurch **gekennzeichnet**, daß der Innenraum (9, 12) des Trägers (6) durch den Ventilsitz (7) unterteilt ist und daß der eine Teil (9) des Innenraums über eine radiale Bohrung (10) mit einem ersten äußeren Ventilanschluß (11) und der andere Teil (12) des Innenraums über eine axiale Bohrung (13) mit einem zweiten äußeren Ventilanschluß (14) in Verbindung steht.

3. Magnetventil nach Anspruch 1 oder 2, dadurch **gekennzeichnet**, daß die Führung für den Stößel (8) aus einem oben im Träger (6) angeordneten Einsatz (15) und einer im axialen Abstand dazu im Innenraum (9) oberhalb des Ventilsitzes (7) des Trägers (6) quer zu dessen Längserstreckung befestigten Scheibe (16) besteht, wobei der Einsatz (15) und die Scheibe (16) außer einer zentralen Bohrung für den Stößel (8) zumindest je einen weiteren Durchlaß (17, 18) für das Arbeitsmedium aufweisen.

4. Magnetventil nach Anspruch 3, dadurch **gekennzeichnet**, daß der Stößel (8) im Bereich zwischen dem Einsatz (15) und der Scheibe (16) ein Widerlager (19) für eine zweite, in Öffnungsrichtung wirkende Rückstellfeder (20) aufweist, die sich mit ihrem anderen Ende auf der Scheibe (16) abstützt.

5. Magnetventil nach Anspruch 4, dadurch **gekennzeichnet**, daß zwischen dem Anker (3) und dem ersten Gehäuseteil (1) die erste in Schließrichtung wirkende Rückstellfeder (21) angeordnet ist, deren Rückstellkraft größer ist als die der zweiten Rückstellfeder (20).

6. Magnetventil nach Anspruch 5, dadurch **gekennzeichnet**, daß zwischen Anker (3) und erstem Gehäuseteil (1) eine Antiklebescheibe (22) angeordnet ist, deren Dicke zum Ausgleich unvermeidbarer Fertigungstoleranzen sowie zur Einstellung des vorgesehenen Arbeitshubes des Ankers (3) abstimmbar ist.

7. Magnetventil nach einem der Ansprüche 1 bis 4, dadurch **gekennzeichnet**, daß im ersten Gehäuseteil (1) eine zentrale axiale Bohrung (23) vorgesehen ist, in der ein zylindrisches Widerlager (24) für die erste, auf den Anker (3) und den Stößel (8) in Schließrichtung wirkende Rückstellfeder (21) axial verschieblich angeordnet ist und in der eine Kugel (25) mit Übermaß abdichtend eingepreßt ist, wobei das Widerlager (24) beim Einpressen der Kugel (25) in Schließrichtung verschiebbar ist, bis über die erste Rückstellfeder (21), den Anker (3) und den Stößel (8) am Ventilsitz (7) ein vorgebbarer Schließdruck erreicht ist.

8. Magnetventil nach Anspruch 3, dadurch **gekennzeichnet**, daß der zur Führung des Stößels (8) dienende Einsatz (15) zur Einstellung des Arbeitshubes bei der Montage relativ zum Träger (6) verschieblich und mit seiner oberen Begrenzungsebene (26) bündig zur Anschlagfläche (27) des Stößels (8) im Träger (6) festlegbar ist, daß im ersten Gehäuseteil (1) eine zentrale axiale Bohrung (23') vorgesehen ist, in der ein hohlzylindrisches Widerlager (24') für die erste auf den Anker (3) und den Stößel (8) in Schließrichtung wirkende Rückstellfeder (21) axial unverschieblich angeordnet ist und in die in axialem Abstand zum Widerlager (24') eine Kugel (25') mit Übermaß abdichtend eingepreßt ist, und daß der Anker (3') an seinem oberen Ende einen zentralen zylindrischen Zapfen (28) zur Führung der ersten Rückstellfeder (21) und einer Antiklebscheibe (22') und an seinem unteren, dem Stößel (8) zugewandten Ende einen zentralen Wulst (29) aufweist, der bei der Montage mittels eines Werkzeugs derart verformbar ist, daß der Arbeitshub durch Bemessung des Abstandes zwischen verformtem Wulst (29) und einer Bezugsebene, die von dem im zweiten Gehäuseteil (2) umlaufenden Anschlag (30) für den im Träger (6) befestigten Einsatz (15) gebildet wird, eingestellt werden kann.

9. Magnetventil nach Anspruch 8, jedoch mit der Maßgabe, daß die Führung für den Stößel (8) im Träger (6) nur aus einem scheibenartigen Einsatz (31) mit in Richtung der Längserstreckung des Magnetventils verlängertem Führungsteil (32) besteht, daß der Träger (6) an seinem oberen, am umlaufenden Anschlag (30) anliegenden Bereich (33) plastisch verformbar ausgebildet ist und daß die Anschlagsebene des Trägers (6) durch plastische Verformung bei der Montage bündig zur Anschlagfläche (27) des Stößels (8) ausrichtbar ist.

## Claims

1. Magnetic valve for liquid and gaseous working media, in particular for hydraulic brake systems in automotive vehicles, which includes a first cylindrical housing part (1) that is encompassed on its outside by a magnetic coil (35) and has a cylindrical recess inside which extends in the longitudinal extension of the magnetic valve and accommodates and guides an armature (3, 3'), a first resetting spring (21) and a valve closure member which is configured as a tappet (8), a second cylindrical housing part (2) which is arranged coaxially to the first housing part (1) and includes a cylindrical recess (5) extending in the direction of the longitudinal extension of the magnetic valve, the said recess being in connection to outside valve ports (11, 14) and a valve seat (7) cooperating with the tappet (8) being arranged therein, wherein the tappet (8) and the valve seat (7) are accommodated in a tubular support member (6), and wherein the support member (6) is arranged in the recess (5) of the second housing part (2),
**characterized** in that the support member (6), with its top boundary, bears against a circumferential stop (30) in the housing (1, 2), in that the tappet (8) is guided as a unit preassembled in the support member (6), and in that the first and second housing parts (1, 2) form a housing which is made in one part of a ferromagnetic material, which encompasses the armature (3, 3') in the shape of a sleeve (4) over at least part thereof in the longitudinal extension of the magnetic valve, the wall thickness of the sleeve being sufficient to reduce the magnetic shortcircuit but not exceeding the thickness required to reliably accommodate mechanical stresses.

2. Magnetic valve as claimed in claim 1,
**characterized** in that the inner space (9, 12) of the support member (6) is subdivided by the valve seat (7), and in that the one part (9) of the inner space is connected to a first outside valve port (11) by way of a radial bore (10) and the other part (12) of the inside space is connected to a second outside valve port (14) by way of an axial bore (13).

3. Magnetic valve as claimed in claim 1 or claim 2,
**characterized** in that the guide arrangement for the tappet (8) is made up of an insert (15) placed in the top of the support member (6) and a washer (16) which is spaced axially thereto and is attached in the inner space (9) above the valve seat (7) of the support member (6) transversely to said's longitudinal extension, wherein the insert (15) and the washer (16) have at least each one further passage (17, 18) for the operating medium beside a central bore for the tappet (8).

4. Magnetic valve as claimed in claim 3,
**characterized** in that the tappet (8) in the area between the insert (15) and the washer (16) includes a thrust (19) for a second resetting spring (20) which acts in the opening direction and is supported with its other end on the washer (16).

5. Magnetic valve as claimed in claim 4,
**characterized** in that interposed between the armature (3) and the first housing part (1) is a first resetting spring (21) which acts in the closing direction and the resetting force of which is in excess of that of the second resetting spring (20).

6. Magnetic valve as claimed in claim 5,
**characterized** in that interposed between the armature (3) and the first housing part (1) is an anti-stick washer (22) having a thickness which is adaptable for the compensation of inevitable manufacturing tolerances and for the adjustment of the determined operating stroke of the armature (3).

7. Magnetic valve as claimed in any one of claims 1 to 4,
**characterized** in that a central axial bore (23) is provided in the first housing part (1) in which a cylindrical thrust (24) for the first resetting spring (21) that acts upon the armature (3) and the tappet (8) in the closing direction is arranged so as to be axially displaceable, and in the said bore an oversized ball (25) is pressed in so as to seal, wherein the thrust (24) is displaceable in the closing direction, when the ball (25) is pressed in, until a predeterminable closing pressure is achieved on the valve seat (7) by way of the first resetting spring (21), the armature (3) and the tappet (8).

8. Magnetic valve as claimed in claim 3,
**characterized** in that the insert (15) for guiding the tappet (8) is displaceable in relation to the support member (6) during the assembly for the adjustment of the operating stroke and, with its top boundary plane (26), is movable to be fixed in position flush with the stop surface (27) of the tappet (8) in the support member (6), in that a central axial bore (23') is provided in the first housing part (1) in which a hollow-cylindrical thrust (24') for a first resetting spring (21) that acts upon the armature (3) and the tappet (8) in the closing direction is axially unslidably arranged, and into which an oversized ball (25') which is spaced axially from the thrust (24') is sealingly pressed in, and in that the armature (3') on its top end includes a central cylindrical pin (28) to guide the first resetting spring (21) and an anti-stick washer (22'), and has a central bead (29) at its bottom end close to the tappet (8) which is deformable in the assembly by a tool so that the operating stroke can be adjusted by rating the distance between the deformed bead (29) and a plane of reference which is produced by the circumferential stop (30) in the second housing part (2) for the insert (15) attached in the support member (6).

9. Magnetic valve as claimed in claim 8, however, under the proviso that the guide for the tappet (8) in the support member (6) comprises only a washer-type insert (31) with a guide portion (32) that is extended in the direction of the longitudinal extension of the magnetic valve, that the support member (6) is plastically deformable on its top area (33) which abuts on the circumferential stop (30), and in that the stop plane of the support member (6) is alignable to become flush with the stop surface (27) of the tappet (8) by plastical deformation during the assembly.

## Revendications

1. Soupape magnétique pour milieux liquides et gazeux de travail, notamment pour des installations de freinage hydraulique dans des véhicules automobiles, comportant une première partie de boîtier cylindrique (1), qui est entourée extérieurement par une bobine magnétique (35) et comporte intérieurement un évidement cylindrique qui s'étend sur l'étendue longitudinale de la soupape magnétique et sert à recevoir et guider une armature (3, 3'), un premier ressort de rappel (21) et un organe de fermeture de soupape agencé sous la forme d'un poussoir (8), une seconde partie de boîtier cylindrique (2), qui est disposée coaxialement à la première partie de boîtier (1), et un évidement cylindrique (5), qui s'étend dans la direction de l'étendue longitudinale de la soupape magnétique et est relié à des raccords extérieurs (11, 14) de la soupape et dans lequel est disposé un siège de soupape (7) coopérant avec le poussoir (8), le poussoir (8) et le siège de soupape (7) étant logés dans un support de forme tubulaire (6), et dans laquelle le support (6) est disposé dans l'évidement (5) de la seconde partie de boîtier (2), caractérisée en ce que le support (6) s'applique, par sa limite supérieure, contre une butée périphérique (30) dans le boîtier (1, 2), que le poussoir (8) est guidé en tant qu'unité préassemblée dans le support (6) et que les première et seconde parties de boîtier (1, 2) forment un boîtier d'un seul tenant réalisé en un matériau ferromagnétique, qui entoure l'armature (3, 3') au moins sur une partie de l'étendue longitudinale de la soupape magnétique, et ce sous la forme d'une douille (4), dont l'épaisseur de paroi n'est pas supérieure à ce qui est nécessaire pour supporter d'une façon sûre les contraintes mécaniques, afin de réduire le court-circuit magnétique.

2. Soupape magnétique selon la revendication 1, caractérisée en ce que l'espace intérieur (9, 12) du support (6) est divisé par le siège de soupape (7) et qu'une partie (9) de l'espace intérieur est reliée par l'intermédiaire d'un perçage radial (10) à un premier raccord extérieur (11) de la soupape et que l'autre partie (12) de l'espace intérieur est relié par l'intermédiaire d'un perçage axial (13) à un second raccord extérieur (14) de la soupape.

3. Soupape magnétique selon la revendication 1 ou 2, caractérisée en ce que le guide prévu pour le poussoir (8) est constitué par un insert (15), qui est disposé dans la partie supérieure du support (6), et par un disque (16), qui est fixé à une certaine distance axiale de l'insert à l'intérieur de l'espace intérieur (9) au-dessus du siège de soupape (7) du support (6), transversalement à l'étendue longitudinale de ce dernier, l'insert (15) et le disque (16) comportant, en dehors d'un perçage central pour le poussoir (8), au moins respectivement un autre passage (17, 18) pour le fluide de travail.

4. Soupape magnétique selon la revendication 3, caractérisée en ce que le poussoir (8) comporte, dans la zone située entre l'insert (15) et le disque (16), une butée (19) pour un second ressort de rappel (20) agissant dans le sens de l'ouverture et qui prend appui par son autre extrémité sur le disque (16).

5. Soupape magnétique selon la revendication 4, caractérisée en ce qu'entre l'armature (3) et la première partie de boîtier (1) est disposé le premier ressort de rappel (21), qui agit dans le sens de la fermeture et dont la force de rappel est supérieure à celle du second ressort de rappel (20).

6. Soupape magnétique selon la revendication 5, caractérisée en ce qu'entre l'armature (3) et la première partie de boîtier (1) est disposé un disque antiadhésif (22), dont l'épaisseur peut être réglée pour compenser des tolérances inévitables de fabrication ainsi que pour régler la course de travail prévue de l'armature (3).

7. Soupape magnétique selon l'une des revendications 1 à 4, caractérisée en ce que dans la première partie de boîtier (1) est prévu un perçage axial central (23), dans lequel une butée cylindrique (24) pour le premier ressort de rappel (21) agissant sur l'armature (3) et le poussoir (8) dans le sens de la fermeture est disposée de manière à être déplaçable axialement, et dans lequel une bille (25) présentant une surcote est enfoncée d'une manière établissant une étanchéité, la butée (24) étant déplaçable dans le sens de la fermeture lors de l'enfoncement de la bille (25), jusqu'à ce qu'une pression de fermeture pouvant être prédéterminée soit atteinte au niveau du siège de soupape (7) par l'intermédiaire du premier ressort de rappel (21), de l'armature (3) et du poussoir (8).

8. Soupape magnétique selon la revendication 3, caractérisée en ce que l'insert (15) utilisé pour le guidage du poussoir (8) est déplaçable par rapport au support (6) lors du montage pour le réglage de la course de travail et peut être fixé par son plan limite supérieur (26) de niveau avec la surface de butée (27) du poussoir (8) dans le support (6), que dans la première partie de boîtier (1) il est prévu un perçage axial central (23'), dans lequel une butée cylindrique creuse (24') pour le premier ressort de rappel (21) agissant sur l'armature (3) et sur le poussoir (8) dans le sens de la fermeture, est disposée de manière à être immobile axialement et dans lequel une bille (25') présentant une surcote est enfoncée d'une manière étanche, à distance axiale de la butée (24'), et que l'armature (3') comporte, au niveau de son extrémité supérieure, un téton central cylindrique (28) servant à guider le premier ressort de rappel (21) et un disque antiadhésif (22') et, au niveau de son extrémité inférieure tournée vers le poussoir (8), un bourrelet central (29) qui est déformable lors du montage à l'aide d'un outil de telle sorte que la course de travail peut être réglée par dimensionnement de la distance entre le bourrelet déformé (29) et un plan de référence, qui est formé par la butée circonférentielle (30) située dans la seconde partie de boîtier (2) et est prévue pour l'insert (15) fixé dans le support (6).

9. Soupape magnétique selon la revendication 8, mais avec la spécification selon laquelle le guide pour le poussoir (8) dans le support (6) est constitué uniquement par un insert en forme de disque (31) possédant une partie de guidage (32), qui est prolongée dans la direction d'étendue longitudinale de la soupape magnétique, que le support (6) est agencé de manière à être déformable plastiquement au niveau de sa partie supérieure (33), qui s'applique contre la butée périphérique (30) et que le plan de butée du support (6) peut être aligné, par déformation plastique lors du montage, de niveau avec la surface de butée (27) du poussoir (8).
